# EUROPEAN PATENT APPLICATION

(11) **EP 1 708 198 A1**
(43) Date of publication of application: **04.10.2006**
(21) Application number: 06006419.3
(22) Date of filing: 28.03.2006
(51) Int. Cl.: G11B 27/034, H04N 7/26, H04N 7/01, G11B 27/00, G11B 27/10, H04N 5/783

(54) **Encoded video conversion apparatus, conversion method and program product**

(30) Priority: 28.03.2005 JP 2005092167
(71) Applicant: Pioneer Corporation, Meguro-ku, Tokyo (JP)
(72) Inventor: Kimura, Tomohiro, 4-chome, Ohta-ku Tokyo (JP)
(74) Representative: Reinhard - Skuhra - Weise & Partner

(57) **Abstract**

A video encoding conversion apparatus which records a video signal recorded on a first compressed video record medium on a second compressed video record medium, including: a video decoder with n/m-fold speed reproduction function for reproducing the video signal recorded on the first compressed video recordmedium; a video encoder for encoding the reproduced video signal; and a central processing unit for performing control of recording an output of the video encoder on the second compressed video record medium while synchronizing the video encoder and the video decoder with n/m-fold speed reproduction function.

## Description

The present disclosure relates to the subject matter contained in Japanese Patent Application No. 2005-092167 filed on March 28, 2005, which is incorporated herein by reference in its entirety.

### BACKGROUND OF THE INVENTION

### 1. Field of the Invention

The present invention relates to a high-speed encoded video signal conversion method and encoded video conversion apparatus, conversion method and program product capable of video dubbing/recording in a shorter time than reproduction time.

### 2. Description of the Related Art

In high-speed encoded video conversion commercialized conventionally, for example, a video encoding mode of a conversion destination is equal to a video encoding mode of a conversion source as shown in a high-speed dubbing function of an HDD/DVD recorder. The high-speed conversion has actually been made in a form of making a data copy of a payload part while changing a header part of data.

Also, in a portable device nowadays, compressed video can be reproduced and as its format, an MPEG4 format has been generalized. Its reproduction capability has a maximum of 10 frames per second which are less than 30 frames per second of TV video, so that the TV video is thinned out and encoded at the time of encoding. Thus, video of 10 minutes is dubbed with 10 minutes.

### SUMMARY OF THE INVENTION

In the related-art, video dubbing with reproduction time of 10 minutes required 10 minutes and high-speed dubbing could not be performed.

The present invention provides a novel high-speed encoded video signal conversion method and high-speed encoded video conversion apparatus capable of video dubbing in a shorter time than reproduction time.

According to an aspect of the invention, there is provided an encoded video conversion apparatus which records a video signal recorded on a first compressed video record medium on a second compressed video record medium, including: a video decoder with n/m-fold speed reproduction function for reproducing the video signal recorded on the first compressed video record medium; a video encoder for encoding the reproduced video signal; and a central processing unit for performing control of recording an output of the video encoder on the second compressed video record medium while synchronizing the video encoder and the video decoder with n/m-fold speed reproduction function.

According to another aspect of the invention, there is provided an encoded video conversion method which records a video signal recorded on a first compressed video record medium on a second compressed video record medium, the method including the steps of: reproducing the video signal recorded on the first compressed video record medium at n/m-fold speed; and encoding the reproduced video signal in synchronization.

According to still another aspect of the invention, there is provided a program product for enabling an encoded video conversion apparatus, which records a video signal recorded on a first compressed video recordmedium on a second compressed video record medium and comprises a video decoder with n/m-fold speed reproduction function for reproducing the video signal recorded on the first compressed video record medium, a video encoder for encoding the reproduced video signal, and a central processing unit for performing control of recording an output of the video encoder on the second compressed video record medium while synchronizing the video encoder and the video decoder with n/m-fold speed reproduction function, to perform function including the steps of: reproducing the video signal recorded on the first compressed video recordmedium at n/m-fold speed; and encoding the reproduced video signal in synchronization.

### BRIEF DESCRIPTION OF THE DRAWINGS

Fig. 1 is a schematic diagram showing a system configuration of a high-speed encoded video conversion apparatus according to an embodiment of the invention;
Fig. 2 is a diagram showing aprocess of obtaining reproduced video of three-fold speed from compressed video recorded in a DVD-Video format;
Fig. 3 is a diagram showing examples of resolution used in a portable device and resolution used in recording of a DVD;
Fig. 4 is a diagram showing one example of video outputted to a monitor for check of the invention;
Fig. 5 is a flowchart for initialization of high-speed dubbing processing; and
Fig. 6 is a flowchart for a high-speed dubbing operation.

### DETAILED DESCRIPTION OF THE PREFFERED EMBODIMENTS

In the present invention, high-speed encoded video conversion is implemented by an n/m-fold speed reproduction function realized by thinning out decoding in decoding processing of compressed video recorded on a record medium with high random accessibility such as DVD or HDD, a video encoder for encoding this reproduced video by another encoding mode, and a central processing unit for controlling starts of decoding and encoding by synchronizing these function and encoder according to a command, etc., by a user operation.

An embodiment of the invention will be described below with reference to the drawings.

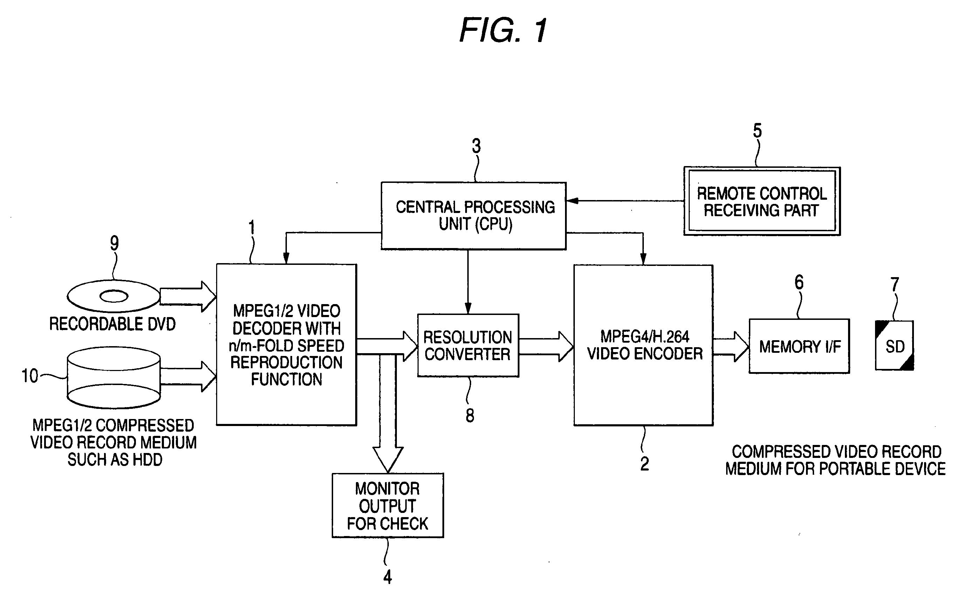

Fig. 1 is a schematic diagram showing a system configuration of a high-speed encoded video conversion apparatus according to an embodiment of the invention.

In Fig. 1, numeral 1 is an MPEG1/2 video decoder with n/m-fold reproduction function, and numeral 2 is anMPEG4/H.264 video encoder, and numeral 3 is a central processing unit (CPU) , and numeral 4 is a monitor for check, and numeral 5 is a remote control receiving part, and numeral 6 is a memory interface (I/F).

Numeral 8 is a resolution converter and is disposed as necessary and can also be eliminated because resolution displayed in a current portable device is QVGA of vertical 240 lines and horizontal 320 pixels at a maximum while compressed video recorded on a DVD, etc., normally has vertical 480 lines and horizontal 720 pixels per frame.

In the configuration of Fig. 1, a compressed video record medium such as an HDD of numeral 10 or a recordable DVD of numeral 9 is decoded by the MPEG1/2 video decoder with n/m-fold reproduction function of numeral 1 and is recorded on a compressed video medium (for example, SD memory) used in a portable device, etc., through the memory I/F and the MPEG4/H.264 video encoder of numeral 2.

Next, a specific technique for obtaining n/m-fold speed reproduced video by the MPEG1/2 video decoder with n/m-fold reproduction function of numeral 1 will be described.

In an MPEG1/2 Video Elementary Layer, a feature of its encoding is variable-length encoding, so that the code amount of each frame (represented as Picture in MPEG) does not become constant.

Also, a fixed data string such as picture_header is arranged inside a data string (represented as Bitstream in MPEG) in order to indicate the head of each frame.

Therefore, as one of the methods for obtaining reproduced video of n/m-fold speed (n/m is larger than one), the inside of Bitstream is searched sequentially and this picture_header is sought out and when it is the picture_header of a desired frame, the reproduced video is obtained by decoding and displaying subsequent codes.

In this case, a system having a compressed video decoder having the capability of searching picture_header higher than one-fold speed and readout of Bitstream at sufficient speed to obtain the reproduced video of n/m-fold speed higher than one-fold speed from a compressed video record medium is required in order to obtain video of n/m-fold speed higher than one-fold speed.

Hence, in recording in, for example, a DVD-Video format, in order to reduce the search capability of a compressed video decoder, the degree of freedom of a Pack structure of an MPEG2 System Layer is utilized and NV_PCK (navigation pack) is defined and a position of picture_header (specifically, a relative address of picture_header to some reference pictures of the inside of GOP (group_of_picture) recordedinsidearecordmedium) is described. Therefore, it becomes easy to seek the head data of the corresponding picture.

The central processing unit (CPU) of Fig. 1 reads each of the descriptors of "a frame frequency", "the number of horizontal pixels" and "the number of vertical pixels" out of a video decoder with n/m-fold speed reproduction function and makes conversion into a desired value and commands a video encoder to describe this value in a bit stream and thereby, a bit stream in which a frame frequency at the time of reproduction after conversion is set to one-fold speed video is generated.

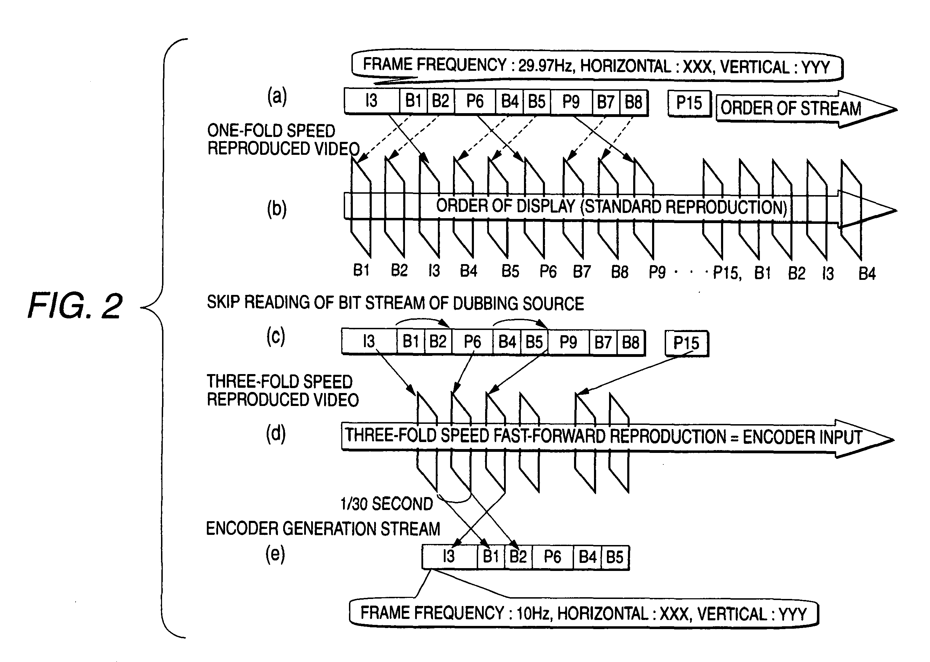

Fig. 2 shows the case of obtaining reproduced video of three-fold speed from compressed video recorded in a DVD-Video format.

Fig. 2 shows a bit stream of a dubbing source and a bit stream after conversion generated by a dubbing operation.

As shown in Fig. 2 (a) , the bit stream of the dubbing source is "I3", "B1", "B2", "P6", "B4", "B5", "P9", "B7", "B8"..."P15". In one-fold speed reproduced video, the order of display becomes "B1", "B2", "I3", "B4", "B5", "P6", "B7", "B8", "P9" ... "P15", "B1", "B2" ... as shown in Fig. 2(b).

Here, "I" is an I picture and "B" is a B picture and "P" is a P picture.

Here, the bit stream of the dubbing source is skipped and read in three-fold speed reproduction.

When only the I picture and the P pictures are read as shown in Fig. 2 (c) , three-fold speed is obtained and the order of display becomes "I3", "P6", "P9", "P15" ... as shown in Fig. 2 (d) .

This bit stream is outputted as a bit stream of "I3", "B1", "B2", "P6", "B4", "B5" through the memory I/F by the video encoder of numeral 2 of Fig. 1 as shown in Fig. 2(e).

While a frame frequency of the bit stream of the dubbing source of Fig. 2(a) is 29.97 Hz, a frame frequency of the bit stream outputted from the memory I/F of Fig. 2(e) is 10 Hz. Thus, dubbing in SD memory which is external memory is executed at three-fold speed.

Next, recoding of n/m-fold speed reproduced video will be described.

The n/m-fold speed reproduced video obtained in Fig. 2 is inputted to the MPEG4/H.264 video encoder. The MPEG4/H.264 video encoder performs recompression by a desired parameter every 1/30 second.

At this time, it is necessary to convert resolution into resolution capable of being reproduced by a portable device.

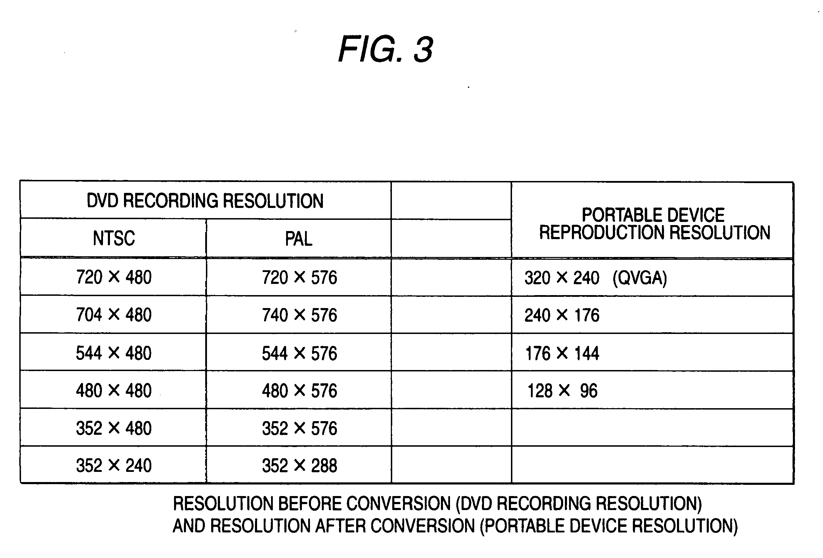

Fig. 3 shows typical resolution used in a portable device and resolution used in recording of a DVD. The resolution converter of Fig. 1 makes conversion of resolution as shown in, for example, Fig. 3, but the conversion of resolution is not necessarily made.

Also, transmission is performed in synchronization with video in a state in which a frame frequency is 1/30, but a value of 1/30 / (n/m) (that is, 1/10 for three-fold speed) is described in a descriptor of a frame frequency in a bit stream in recoding and thereby, reproduction at one-fold speed can be ensured at the time of reproduction.

With respect to synchronization between the video decoder and the video encoder, a function of making a decision on dubbing start and end positions and a check of video for performing high-speed dubbing is required from the standpoint of user use.

In the invention, a check is made by projecting a monitor output for check shown in Fig. 1 on a television, etc.

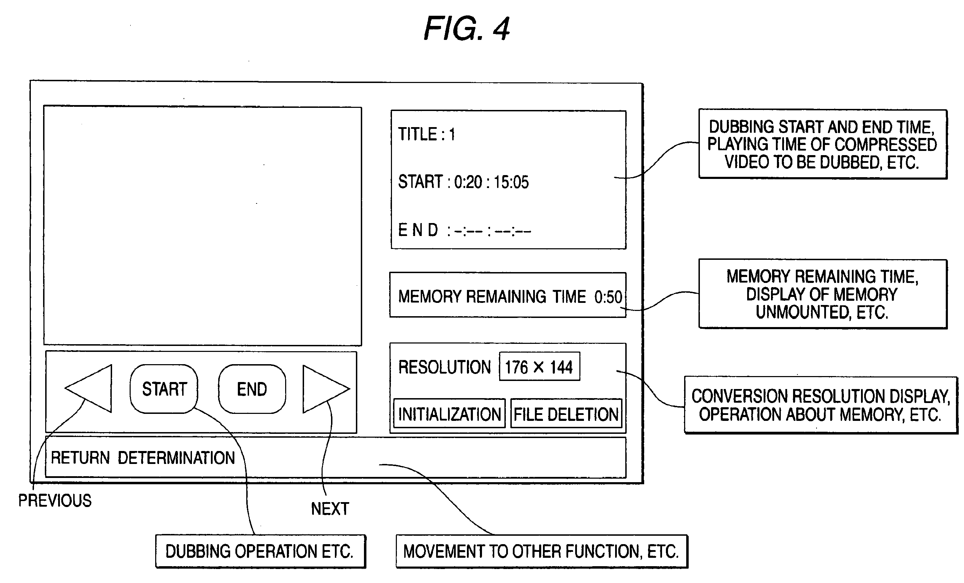

Video outputted on a monitor is graphics and video, etc., outputted by a compressed video decoder with n/m-fold speed reproduction function. For example, the video is shown in Fig. 4.

When it is assumed that start and end times are set and dubbing is started in such a user interface, it is desired that the video decoder and the video encoder respectively perform a decoding action and an encoding action from the same frame (synchronization between the video decoder and the video encoder).

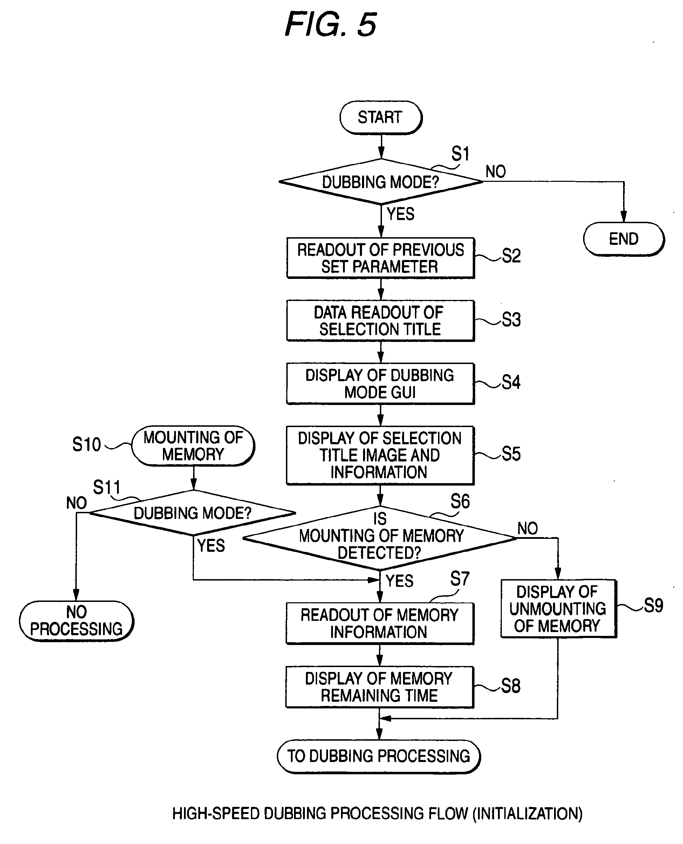

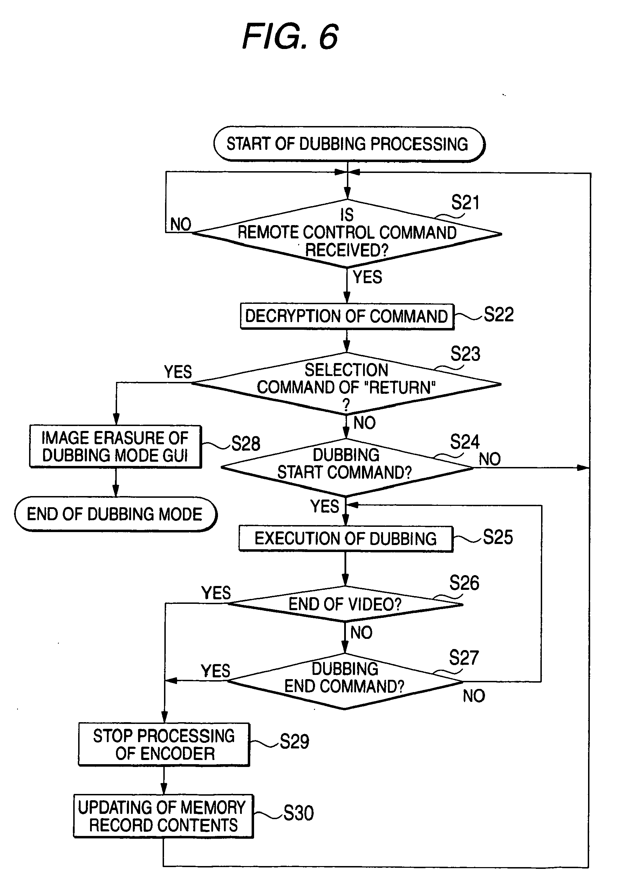

Therefore, the central processing unit of Fig. 1 receives a dubbing operation command from a remote control unit, and seeks a desired decoding start point out of a compressed video record medium, and inputs a bit stream read out of the start point to the video decoder, and issues a decoding start command so as to obtain decoded video and also, issues an encoding start command of the encoder simultaneously with an output of the decoded video of its head. Also, a procedure for performing control so as to write a converted bit stream from the video encoder in memory will be described using flowcharts of Figs. 5 and 6.

Fig. 5 is a flowchart for initialization of high-speed dubbing processing.
- It is decided whether or not it is a dubbing mode (step S1).
- When the decision in step S1 is Yes, the previous set parameter is read out (step S2).
- Next, data readout of a selection title is executed (step S3).
- Further, a dubbing mode GUI is displayed (step S4).
- Further, a selection title image and information are displayed (step S5).
- Then, it is decided whether or not memory is mounted (step S6) and for No, unmounting of memory is displayed (step S9) and the flowchart returns to step S6.
- When the decision in step S6 is Yes, readout of memory information is executed (step S7) and memory remaining time is displayed (step S8) and dubbing processing is started.
- When mounting of the memory is executed (step S10), it is decided whether or not it is a dubbing mode, and the flowchart proceeds to step S7 and for No, processing is not performed.

Fig. 6 is a flowchart for a high-speed dubbing operation.
- It is decided whether or not the remote control receiving part 5 of the high-speed encoded video conversion apparatus receives a remote control command, and for No, the flowchart returns to step S21 (step S21).
- When the decision in step S21 is Yes, decryption of the command is executed (step S22).
- It is decided whether or not the command is a selection command of "return" (step S23).
- When the decision in step S23 is Yes, image erasure of the dubbing mode GUI is executed and the dubbing mode is ended (step S28).
- When the decision in step S23 is No, it is decided whether or not the command is a dubbing start command (step S24).
- When the decision in step S24 is Yes, dubbing is executed (step S25).
- It is decided whether or not video is ended (step S26).
- When the decision in step S26 is Yes, stop processing of the encoder is executed (step S29), and updating processing of the memory record contents is performed (step S30) and the flowchart returns to step S1.
- When the decision in step S26 is No, it is decided whether or not the command is a dubbing end command (step S27).
- When the decision in step S27 is Yes, the flowchart proceeds to step S29 and when it is No, the flowchart returns to step S25.

In the flowcharts described above, the following terms are used by the following meaning.

Function selection frame: For example, a frame different from other functions is displayed on a GUI in display of a function to be just performed.

Function selection frame movement command: For example, buttons of "↑", "→", "↓", "←" of a remote control unit are depressed.

Function execution command: For example, a "determination" button of the remote control unit is depressed.

In Fig. 6, "functions" indicate settings of "resolution", "file deletion", "initialization" for memory or "previous", "next", "start", "stop", etc. of Fig. 4. For example, in order to seek a video title of a dubbing source, the function is performed by moving a function selection frame to a GUI of "previous" or "next" and depressing "determination".

One example of an operation procedure of a user is shown below.
- By depressing buttons of "↑", "→", "↓", "←" of a remote control unit, a function selection frame is moved to "resolution" of memory and a "determination" button is depressed.
- By depressing the buttons of "↑", "↓", desired resolution is displayed on a GUI screen and the "determination" button is depressed.
- By depressing the buttons of "↑", "→", "↓", "←" of the remote control unit, the function selection frame is moved to "previous" or "next" and the "determination" button is depressed. For "previous", the previous title of the title displayed at present is displayed. For "next", the next title of the title displayed at present is displayed.
- It is checked that the displayed title has desired video, and by depressing the buttons of "←", "→", it is moved to "start" and the "determination" button is depressed. Thus, dubbing is started.
- The playing time of the title is ended or the button of "→" is depressed during playing and it is moved to "end" and when the "determination" button is depressed, the dubbing is ended.

In addition, in the above description, an encoding speed of the video encoder of a conversion destination is set at 30 frames per second which is real time, but in the case of the encoder with an encoding speed lower than this speed, frame synchronization can be obtained by adjusting a reproduction speed of a conversion source video decoder to its encoding speed. However, a conversion speed becomes low accordingly.

In the invention, by having an n/m-fold speed reproduction function and controlling a reproduction speed in a decoder of compressed video of a conversion source (the MPEG1/2 video decoder in the case of the embodiment) and controlling a video encoder of a conversion destination (the MPEG4/H.264 video encoder in the case of the embodiment) in synchronization with this by a program of a central processing unit, a low-cost system can be constructed by making a video synchronizing frequency between the decoder and the encoder equal to a synchronizing frequency of one-fold speed while achieving high-speed conversion.

Also, with respect to a portable device, matching with the existing moving image reproduction specifications is obtained, so that reproduction can be performed without adding a new function.

The invention can also be applied to a digital video camera and a digital recording and reproducing device of an MPEG/H. 26x method having a PC memory I/F.

In addition, in a DV type digital video camera designed for a memory card at present, video on fast-forward cannot be currently reproduced as one correct video for a time of one frame because of its mechanism, but when fast-forward video with high quality will be obtained as shown in a DVD/HDD recorder by technical improvements in future, the invention can be applied to the DV type digital video camera.

## Claims

1. An encoded video conversion apparatus which records a video signal recorded on a first compressed video record medium on a second compressed video record medium, comprising:
a video decoder with n/m-fold speed reproduction function for reproducing the video signal recorded on the first compressed video record medium;
a video encoder for encoding the reproduced video signal; and
a central processing unit for performing control of recording an output of the video encoder on the second compressed video record medium while synchronizing the video encoder and the video decoder with n/m-fold speed reproduction function.

2. The encoded video conversion apparatus as claimed in claim 1, wherein a video signal compressed by MPEG1/2 is in the first compressed video record medium and a video signal compressed by MPEG4/H.264 is in the second compressed video record medium.

3. The encoded video conversion apparatus as claimed in claim 2, wherein in n/m-fold speed reproduction in the video decoder with n/m-fold speed reproduction function, an I picture and/or a P picture of a reproduced bit stream is selected and read out.

4. The encoded video conversion apparatus as claimed in claim 1, further comprising a resolution converter between the video encoder and the video decoder with n/m-fold speed reproduction function.

5. An encoded video conversion method which records a video signal recorded on a first compressed video record medium on a second compressed video recordmedium, the method comprising the steps of:
reproducing the video signal recorded on the first compressed video record medium at n/m-fold speed; and
encoding the reproduced video signal in synchronization.

6. The encoded video conversion method as claimed in claim 5, wherein a video signal compressed by MPEG1/2 is in the first compressed video record medium and a video signal compressed by MPEG4/H.264 is in the second compressed video record medium, and in the n/m-fold speed reproduction, an I picture and/or a P picture of a reproduced bit stream is selected and read out.

7. A program product for enabling an encoded video conversion apparatus, which records a video signal recorded on a first compressed video record medium on a second compressed video record medium and comprises a video decoder with n/m-fold speed reproduction function for reproducing the video signal recorded on the first compressed video record medium, a video encoder for encoding the reproduced video signal, and a central processing unit for performing control of recording an output of the video encoder on the second compressed video record medium while synchronizing the video encoder and the video decoder with n/m-fold speed reproduction function, to perform function comprising the steps of:
reproducing the video signal recorded on the first compressed video record medium at n/m-fold speed; and
encoding the reproduced video signal in synchronization.
